# EUROPÄISCHE PATENTANMELDUNG

(11) **EP 1 180 830 A2**
(43) Veröffentlichungstag der Anmeldung: **20.02.2002**
(21) Anmeldenummer: 01810732.6
(22) Anmeldetag: 25.07.2001
(51) Int. Cl.: H01R 13/73

(54) **Wand- und Deckenanschluss für elektrische Verbraucher**

(30) Priorität: 17.08.2000 CH 159000
(71) Anmelder: Bühler, Leo, 8820 Wädenswil (CH)
(72) Erfinder: Bühler, Leo, 8820 Wädenswil (CH)
(74) Vertreter: Patentanwälte Feldmann & Partner AG

(57) **Zusammenfassung**

Ein neuer Wand- und Deckenanschluss für elektrische Verbraucher wie Lampen, Ventilatoren usw. besteht aus mehreren Elementen. In die Ausnehmung in der Wand oder Decke (D) wird ein Montagering (2) eingelassen. Die Leiter werden aus der Wand oder Deckegezogen und an Muffen in einer Muffenhalterung (1) befestigt. Die Anordnung der Muffen in der Muffenhalterung (1) entspricht derjenigen einer Normsteckdose. Ein Fixierring (4) wird in den Montagering (2) eingeschraubt. Dabei wird die Muffenhalterung (1) nach oben gestossen und mit ihr ein Sprengring (3). Der Sprengring (3) verkeilt den Montagering in der Decke. In einer Abdeckung befindet sich drehbar ein Steckerelement (6). Dieses wird mit der Muffenhalterung (1) verbunden und die Abdeckung gesichert. Die Abdeckung (5) bildet zugleich eine Aufhängung für den elektrischen Verbraucher.

## Beschreibung

Die Erfindung betrifft einen Wand- und Deckenanschluss für elektrische Verbraucher nach dem Oberbegriff des unabhängigen Patentanspruches

Zur Befestigung und zum elektrischen Anschluss von Verbrauchern wie Deckenlampen, Deckenventilatoren und dergleichen, wird üblicherweise ein einfacher Haken durch ein Loch in der Wand oder Decke eingeschraubt und der Verbraucher daran aufgehängt. Häufig wird auch eine seitwärts erweiterbare Sprengschiene im Loch in der Wand oder Deckeangebracht und der Verbraucher daran befestigt. Die elektrischen Anschlüsse erfolgen separat. Meist werden die Installationsdrähte oder Kabel einfach ein Stück aus dem Loch in der Wand oder Deckeherausgezogen und mittels Leuchterklemmen mit den Zuleitungen des Verbrauchers verbunden. Ein Nachteil dieser Art von Deckenanschlüssen besteht darin, dass beim Wechsel eines Verbrauchers alles entfernt werden muss. Um die Gefahr von Stromschlägen für den Menschen zu verhindern muss dazu die Stromzufuhr unterbrochen werden, indem die entsprechende Sicherung herausgeschraubt wird.

Aufgabe der Erfindung ist es, einen Wand- und Deckenanschluss für elektrische Verbraucher anzugeben, bei welchem eine einmal erstellte Installation in der Wand oder Deckeverbleiben kann, wenn der Verbraucher gewechselt oder weggenommen wird.

Diese Aufgabe wird durch die in den Patentansprüchen angegebene Erfindung gelöst.

Ein zusätzlicher Vorteil der Erfindung ist, dass die elektrische Verbindung über Normstecker erfolgen kann. Dieser kann am elektrischen Verbraucher im spannungslosen Zustand vormontiert werden. Die Gefahr von Kontakt mit Leitungen unter Spannung ist dadurch vermieden.

Die Erfindung wird nachstehend im Zusammenhang mit den Zeichnungen beschrieben. Es zeigen:
- Figur 1: Eine Explosionszeichnung des erfindungsgemässen Wand- und Deckenanschlusses mit den einzelnen Elementen vor Montage im Querschnitt;
- Figur 2: den Wand- und Deckenanschluss im montierten Zustand;
- Figur 3: eine Variante für einen getrennt vom Anschluss angeordneten Verbraucher und
- Figur 4: einen Wand- und Deckenanschluss mit einem einbetonierbaren Zuleitungskasten.

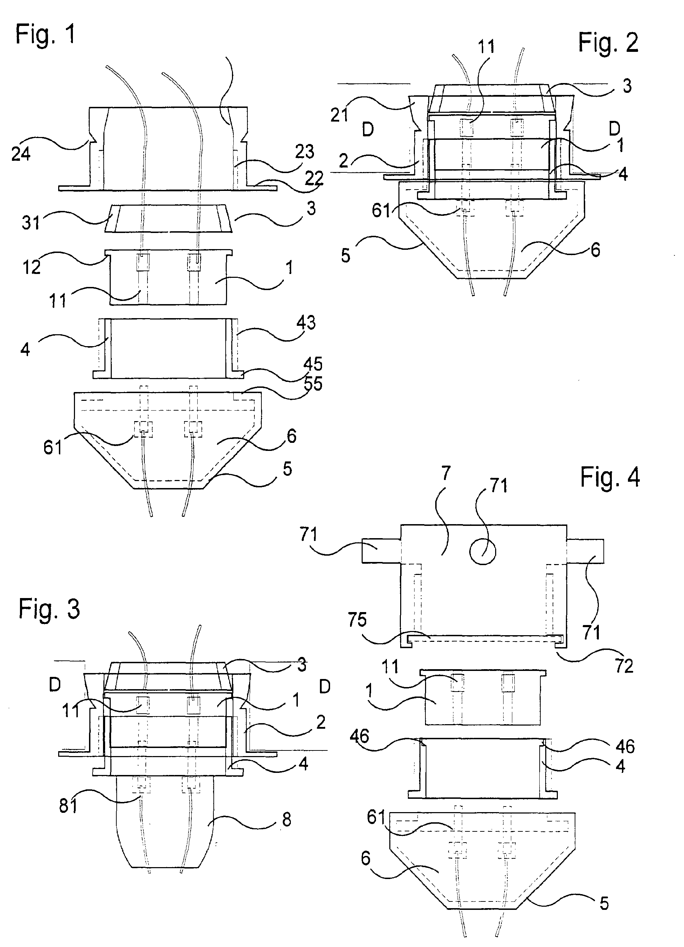

Ein erfindungsgemässer Deckenaschluss für elektrische Verbraucher ist im Aufbau aus den Figuren 1 und 4 gut ersichtlich. Er weist eine Halterung zur Befestigung in einer Ausnehmung in einer Wand oder Decke D auf. Erste elektrische Leiter 111, 112 sind als Zuleitung in der Wand oder Deckeeingezogen und führen in die Ausnehmung. Die Halterung besteht aus einem Montagekörper M, einer Muffenhalterung 1. Ein Fixierring 4 ist teilweise von unten in den Montagekörper M einschraubbar. Der Montagekörper M hat über einen Teil seiner Länge ein Innengewinde 23, 73. Der Fixierring 4 hat ein dazu passendes Aussengewinde 43. Die Muffenhalterung 1 hat einen Aussendurchmesser, welcher dem Innendurchmesser des Fixierringes 4 entspricht. Mit einem Absatz 12 kommt die Muffenhalterung 1 am oberen Ende des Fixierringes 4 zum Anschlagen. Sie kann somit durch den Fixierring 4 an einen Sprengring 3 (Figur 1 bis 3) oder an einen Anschlag 74 (Figur 4) angedrückt werden. Der Absatz 12 ist als umlaufender Ring oder als nach aussen ragende Laschen ausgestaltet. Ihr Aussendurchmesser ist grösser als der Innendurchmesser des Fixierringes 4 und kleiner als der Innendurchmesser des Montagekörpers M.

Die Muffenhalterung ist mit Mitteln zum Verbinden von ersten elektrischen Leitern 111, 112 als Zuleitung, mit zweiten elektrischen Leitern 611, 612 zum Anschluss eines Verbrauchers versehen. Es handelt sich dabei um Muffen 11, wie sie bei Steckdosen und dergleichen üblich sind. Die Anordnung der Muffen 11 in der Muffenhalterung 1 entspricht derjenigen einer Normsteckdose. Daraus ersichtlich ist, dass statt einem Gerät auch ein gewöhnlicher Normstecker 8 in die Muffenhalterung 1 des Wand- und Deckenanschlusses eingesteckt werden kann (Figur 3). Der Verbraucher kann somit vom Wand- und Deckenanschluss selbst entfernt sein.

Der Montagekörper kann entweder als Montagering 2 (Figuren 1 bis 3) oder als Montagedose 7 (Figur 4) ausgeführt sein.

Bei der Montage werden die Leiter 111, 112 durch den Montagering 2 gezogen. Der Montagering 2 wird dann in die Ausnehmung in der Wand oder Decke gesteckt, bis er mit einem Deckenabschluss 22 an der Unterseite der Wand oder Decke anliegt. Darauf wird ein Sprengring aufgezogen und die Leiter 111, 112 werden in Muffen 11 in der Muffenhalterung nach üblicher Art befestigt. Die Muffenhalterung 11 entspricht in der Anordnung der Muffen den üblichen Normsteckdosen. So kann als Verbraucheranschluss auch ein ganz normaler Normstecker verwendet werden.

Nun wird ein Fixierring 4 von unten über die Muffenhalterung 1 gesteckt und alles zusammen nach oben in den Montagering eingeschraubt. Dazu weist der Fixierring 4 ein Aussengewinde 43 auf, welches einem Innengewinde 23 im Montagering 2 entspricht. Mit dem Einschrauben des Fixierringes 4 wird die Muffenhalterung 1 und durch diese der Sprengring 3 nach oben in den Montagering gestossen. Der Sprengring 3 weist eine nach aussen geneigte Fläche als konische Erweiterung 31 auf. Die konische Erweiterung 31 kommt nun an eine konische Verengung 21 im Innern des Montageringes 2 zum Anliegen. Beim weiteren Einschrauben des Fixierringes 4 wird der Montagering oben im Bereich der konischen Verengung nach aussen gedrückt und der Aussendurchmesser wird erweitert. Der Montagering 2 klemmt sich seitlich an der Ausnehmung an der Wand oder Decke fest. Ein Drehstop mit Nut und Nocken kann dafür sorgen, dass beim Eindrehen des Fixierringes 4 die Muffenhalterung 1 gegenüber dem Montagering 2 nicht verdreht werden kann. Alternativ kann der Fixierring 4 am oberen Rand mit einem eingezogenen Anschlagabsatz 46 versehen sein, in welchem die Muffenhalterung 1 mit ihrem Absatz 12 zum anliegen kommt (Figur 4). Die Muffenhalterung 12 kann somit im Fixierring drehbar ausgeführt sein.

Anschliessend wird ein Verbraucheranschluss angeschlossen. Eine Abdeckung 5, welche gleichzeitig eine Aufhängung eines Verbrauchers sein kann (Lampenhalterung usw.) weist einen Steckereinsatz 6 auf. Er ist darin drehbar angeordnet. Die Steckerelemente 611, 612 werden in die Muffen 11 aufgeschoben und eingefahren. Am Schluss wird mittels einem Schnellverschluss Abdeckung 5 und Fixierring 4 gegeneinander gesichert. Dies kann mit einem Bajonettverschluss geschehen. Unten am Fixierring 4 weisen erste Laschen 45 radial nach aussen und oben an der Abdeckung weisen zweite Laschen 55 radial nach innen. Alternativ können auch die ersten Laschen 45 radial nach innen und die zweiten Laschen 55 radial nach aussen weisen. Die Abdeckung wird von unten an den Fixierring 4 angelegt, etwas nach oben gestossen und um einen bestimmten Winkel verdreht. Nun hintergreifen die zweiten Laschen 55 der Abdeckung 5 die ersten Laschen 45 des Fixierringes 4. Es ist offensichtlich, dass entweder die Muffenhalterung 1 oder der Steckereinsatz 6 in Ihrer Aufnahme drehbar sind, damit die Steckverbindung zustandekommt und der Wand- oder Deckenanschluss geschlossen werden kann.

Zum Zweck einer Vormontage beim Bau eines Gebäudes kann mit Montagedosen 7 gemäss Figur 4 gearbeitet werden. Solche Montagedosen 7 weisen seitliche Kabeleinführungen auf. Hier werden die Kabel und Leiter nach üblicher Art zu und eingeführt. Die Montagedose 7 weist ein von unten nach oben führendes Innengewinde 73 auf, welches dem Innengewinde 23 im Montagering 2 entspricht. Muffenhalterung 1, Abdeckung 5 mit drehbarem Steckereinsatz 6 und Fixierring 4 sind identisch mit der oben beschriebenen Ausführung. Die Montagedose 7 weist nun im Bereich des unteren Endes eine Schnappnut 72 und/oder einen Gewindeschutz auf. Hier befindet sich vor der Montage eine Montageplatte 75 eingeschnappt. Vor dem Betonieren einer Wand oder Decke werden ausser den Armierungen auch Kabelkanäle, Verteilerdosen und eben auch solche Montagdosen vorverlegt. Die Montagedose 7 wird einfach am gewünschten Ort auf eine Schalung gelegt. Dann wird sie darauf befestigt, indem die Montageplatte 75 oder die Montagedose 7 auf die Schalung genagelt, geschraubt oder geklebt wird. Wenn das Deckenmaterial ausgehärtet ist und die Schalung entfernt wird, so schnappt die Montageplatte 75 aus der Schnappnut 72 und bleibt an der Schalung. Natürlich kann die Montagedose 7 auch direkt an der Schalung befestigt werden. Dabei empfiehlt sich, einen Gewindeschutz in die Monstagedose 7 einzuführen, damit kein Beton oder dergleichen während dem Bau eindringen kann. In der Wand oder Decke eingegossen bleibt die Montagedose 7. Sie ist nun bereit, um Kabel mit Leitern 111, 112 einzuziehen. Anschliessend kann der Wand- und Deckenanschluss wie oben beschrieben fertig montiert werden.

## Patentansprüche

1. Wand- und Deckenanschluss für elektrische Verbraucher mit einer Halterung zur Befestigung in einer Ausnehmung in einer Wand oder Decke (Dl und mit ersten elektrischen Leitern (111, 112) als Zuleitung, **dadurch gekennzeichnet, dass** die Halterung einen Montagekörper (M), eine Muffenhalterung (1) und einen in den Montagekörper (M) teilweise einschraubbaren Fixierring (4) aufweist, wobei der Montagekörper (M) ein Innengewinde (23, 73) und der Fixierring (4) ein dazu passendes Aussengewinde (43) aufweist und wobei die Muffenhalterung (1) einen Aussendurchmesser aufweist, welcher dem Innendurchmesser des Fixierringes (4) entspricht, und mit einem Absatz (12) versehen ist, welcher grösser ist als der Innendurchmesser des Fixierringes (4) und dass Mittel zum Verbinden der ersten elektrischen Leiter (111, 112) mit zweiten elektrischen Leitern (611, 612) vorhanden sind.

2. Wand- und Deckenanschluss nach Anspruch 1, **dadurch gekennzeichnet, dass** die Mittel zum Verbinden der elektrischen Leiter in der Muffenhalterung angeordnete Muffen (11) sind, an welchen die ersten Leiter (111, 112) anschliessbar sind.

3. Wand- und Deckenanschluss nach Anspruch 2, **dadurch gekennzeichnet, dass** die Anordnung der Muffen (11) der einer Normsteckdose entspricht.

4. Wand- und Deckenanschluss nach Anspruch 1, **dadurch gekennzeichnet, dass** der Montagekörper (M) ein Montagering (2) ist, welcher in seinem oberen Bereich eine konische Verengung (21) aufweist und dass ein Sprengring (3) vorhanden ist, welcher durch den Fixierring (4) gegen die konische Verengung (21) pressbar ist.

5. Wand- und Deckenanschluss nach Anspruch 1, **dadurch gekennzeichnet, dass** der Montagekörper (M) eine in eine Wand oder Deckeeinbaubare Montagedose 7 und mindestens einen Kabelkanal (71) und lösbare Mittel zur Vormontage aufweist.

6. Wand- und Deckenanschluss nach Anspruch 4 oder 5, **dadurch gekennzeichnet, dass** eine Abdeckung (5) am Fixierring mittels einem Schnellverschluss befestigbar ist.

7. Wand- und Deckenanschluss nach Anspruch 6, **dadurch gekennzeichnet, dass** in der Abdeckung (5) ein Steckereinsatz (6) drehbar angeordnet ist, wobei der Steckereinsatz (6) mit Steckern (61) zum Anschuss von zweiten Leitern (611, 612) so gestaltet ist, dass die Stecker (61) im montierten Zustand mit den Muffe (11) in der Muffenhalterung leitende Verbindungen bilden.

8. Wand- und Deckenanschluss nach Anspruch 6, **dadurch gekennzeichnet, dass** in die Muffenhalterung (1) im Fixierring (4) drehbar angeordnet ist, und dass der Steckereinsatz (6) mit Steckern (61) zum Anschuss von zweiten Leitern (611, 612) so gestaltet ist, dass die Stecker (61) im montierten Zustand mit den Muffe (11) in der Muffenhalterung leitende Verbindungen bilden.

9. Wand- und Deckenanschluss nach Anspruch 5, **dadurch gekennzeichnet, dass** das Mittel zur Vormontage der Montagedose (7) eine Hilfsplatte (75) ist, welche mittels Schnappelementen (72) mit der Montagedose (7) lösbar verbunden ist.
